(19) Europäisches Patentamt
European Patent Office
Office européen des brevets

(11) **EP 1 171 472 B2**

(12) **NOUVEAU FASCICULE DE BREVET EUROPEEN**

(45) Date de publication et mention de la décision concernant l'opposition:
**06.06.2007 Bulletin 2007/23**

(45) Mention de la délivrance du brevet:
**04.06.2003 Bulletin 2003/23**

(21) Numéro de dépôt: **00915258.8**

(22) Date de dépôt: **30.03.2000**

(51) Int Cl.:
*C08B 30/20* (2006.01)      *A21D 13/06* (2006.01)
*A23L 1/10* (2006.01)      *C09D 103/12* (2006.01)
*C09J 103/12* (2006.01)

(86) Numéro de dépôt international:
**PCT/FR2000/000808**

(87) Numéro de publication internationale:
**WO 2000/058366 (05.10.2000 Gazette 2000/40)**

(54) **FARINES ET AMIDONS A TRES HAUTE TENEUR EN AMYLOPECTINE, LEURS PROCEDES DE PREPARATION ET LEURS APPLICATIONS**

MEHLE UND STÄRKE MIT SEHR HOHEM AMYLOPECTINGEHALT, VERFAHREN ZU DEREN HERSTELLUNG UND DEREN VERWENDUNGEN

FLOURS AND STARCH WITH A VERY HIGH AMYLOPECTIN CONTENT, METHODS FOR THE PRODUCTION AND USES THEREOF

(84) Etats contractants désignés:
**AT BE CH CY DE DK ES FI FR GB GR IE IT LI LU MC NL PT SE**

(30) Priorité: **30.03.1999 FR 9904120**

(43) Date de publication de la demande:
**16.01.2002 Bulletin 2002/03**

(73) Titulaire: **Ulice S.A.**
**63200 Riom Cedex (FR)**

(72) Inventeurs:
• **MESSAGER, Arnaud**
**F-63200 Riom (FR)**
• **DESPRE, Denis**
**F-63200 Riom (FR)**

(74) Mandataire: **Breese, Pierre**
**BREESE DERAMBURE MAJEROWICZ**
**38, avenue de l'Opéra**
**75002 Paris (FR)**

(56) Documents cités:
EP-A- 0 319 692          WO-A-96/03891
AU-B- 19 971 009

• DATABASE WPI Week 199737 Derwent Publications Ltd., London, GB; AN 1997-394031 XP002125704 "Flour blend containing waxy wheat flour - prevents deterioration of texture of breads, cakes and noodles after prolonged storage" & AU 10099 97 A (JAPAN MIN NAT FOOD AGRIC FORESTRY & FISH ET AL.), 24 juillet 1997 (1997-07-24)
• TAKESHI YASUI ET AL.: "Amylose and lipid contents, amylopectin structure, and gelatinisation properties of waxy wheat (triticum aestivum) starch" JOURNAL OF CEREAL SCIENCE, vol. 24, 1996, pages 131-137, XP002125703
• PATENT ABSTRACTS OF JAPAN vol. 1997, no. 02, 28 février 1997 (1997-02-28) & JP 08 266253 A (NISSHIN FLOUR MILLING CO LTD), 15 octobre 1996 (1996-10-15)
• PATENT ABSTRACTS OF JAPAN vol. 005, no. 031 (C-045), 25 février 1981 (1981-02-25) & JP 55 157595 A (AJINOMOTO CO INC), 8 décembre 1980 (1980-12-08)
• PATENT ABSTRACTS OF JAPAN vol. 1999, no. 06, 31 mars 1999 (1999-03-31) & JP 09 187234 A (NATL STARCH &AMP;CHEM INVESTMENT HOLDING CORP), 22 juillet 1997 (1997-07-22)

**EP 1 171 472 B2**

**Description**

L'invention se rapporte au domaine agroalimentaire et concerne des produits issus du blé full waxy, notamment des amidons ou des farines de blé full waxy ayant subi un traitement hydrothermique (amidons ou farines BFW-HT) ou les produits contenant ou préparés à partir de telles farines ou de tels amidons.

L'invention a également pour objet un procédé d'obtention de ces produits, notamment de ces amidons ou de ces farines BFW-HT, et leurs utilisations en amidonnerie, pour la fabrication de produits alimentaires, ou de produits non alimentaires.

Le blé est la plus cultivée des céréales et constitue un des aliments de base de la population mondiale. En effet, il sert à produire de la farine de blé qui entre dans la composition du pain, des pâtes, des céréales et nombre d'autres produits alimentaires destinés à l'homme ou aux animaux. Il est connu que le blé, comme toutes les céréales, est riche en amidon, et que l'altération de l'amidon, en quantité ou en qualité, affecte les qualités des farines issues de ce blé.

Les farines recherchées sont celles constituées d'amidon dont les propriétés physiques sont telles que les produits contenant de telles farines ne rétrogradent pas, ni ne rassissent.

L'amidon se présente sous forme de grains ou granules insolubles, simples ou composées, de forme sphérique, lenticulaire ou anguleuse, et de taille variable selon les espèces. La composition d'un granule d'amidon est complexe et varie avec les espèces. Tout d'abord, il comprend de 15 à 20% d'eau, mais aussi des acides gras (1% chez le blé), des phosphates de calcium (céréales) et de potassium (pomme de terre) faisant partie d'un résidu minéral qui peut représenter 0,4% du poids frais (amidon de blé), enfin des protéines dont la plupart sont enzymatiques.

A l'état natif, l'amidon est totalement insoluble. Les grains d'amidon insolubles dans l'eau froide donnent, lorsqu'ils sont traités par l'eau chaude (de 60 à 80°C), un empois, liquide visqueux qui durcit en séchant. Ils renferment donc de l'amylopectine, substance mucilagineuse à laquelle est due la viscosité de l'empois, et de l'amylose qui précipite après refroidissement sous forme d'une poudre blanche.

Ce traitement hydrothermique conduit donc à un gonflement irréversible des granules et à leur solubilisation. Il est nécessaire pour que les propriétés, notamment de viscoélasticité, de polymérisation et de rétrogradation, puissent se révéler.

En effet, le traitement hydrothermique provoque une modification irréversible de la structure semi-cristalline de l'amidon natif, qui passe d'un état ordonné à un état désordonné, c'est la gélatinisation. Le gel ainsi formé n'est pas stable et après quelques jours, l'amidon se réorganise vers une structure plus ordonnée, ce phénomène étant connu sous le nom de rétrogradation. Le rassissement des produits de boulangerie et la viscosité excessive des sauces et autres produits du même type sont liés à cette rétrogradation ainsi qu'un autre phénomène, la synérèse (exsudation d'eau), responsable de la séparation des phases et de la décomposition de la texture des produits.

Dans le cadre de la cuisine traditionnelle, ces problèmes ne se posent pas quand les aliments sont destinés à être consommés rapidement. On peut alors utiliser des farines de blé ou de maïs non modifiés afin d'épaissir une sauce ou une soupe. Mais dès l'instant où l'on souhaite conserver ces aliments, par le froid notamment, les problèmes liés à la rétrogradation surviennent. On peut récupérer quelque peu la texture des aliments, mais le résultat n'est jamais satisfaisant.

Dans le monde de l'industrie agroalimentaire ces problèmes se rencontrent à plus grande échelle. En effet, les aliments ne sont pas destinés à une consommation immédiate, mais on attend d'eux qu'ils soient les mieux conservés possible, le plus longtemps possible.

Ces problèmes limitent l'utilisation d'amidons riches en amylose, et sont une des raisons pour lesquelles des amidons waxy sont recherchés.

On connaît aujourd'hui, chez certaines espèces, et notamment chez le maïs, des amidons composés exclusivement d'amylopectine issus de mutants waxy. Ces mutants sont très recherchés puisqu'ils présentent une tendance à la rétrogradation limitée, garantissant ainsi une texture homogène au cours du temps.

Les mutants waxy sont des plantes dont la synthèse de la GBSS (Granule Bound Starch Synthase), encore appelée Wx protéine, enzyme capitale dans la synthèse de l'amylose, est inhibée, ou des plantes synthétisant de la GBSS inactive. La plupart des amidons waxy proviennent de plantes diploïdes telles que l'orge, le maïs, le riz ou la pomme de terre.

En effet, les techniques utilisées pour obtenir de l'amidon waxy sont plus adaptées aux plantes diploïdes. Par exemple, les traitements mutagènes utilisant des rayons X ou de l'éthylméthane-sulphonate conviennent très bien à des plantes diploïdes, mais sont inefficaces sur des plantes tétra- ou hexaploïdes, ces dernières n'exprimant pas la mutation récessive. Il est donc plus difficile d'obtenir des mutants waxy à partir de plantes polyploïdes compte tenu de la présence de plusieurs isoenzymes qui interviennent dans la synthèse de l'amylose.

Ainsi le blé est polyploïde, et la plupart des variétés de blé sont hexaploïdes, avec trois groupes de sept paires de chromosomes. Trois gènes codent pour trois isoformes de la GBSS, Wx-A1, Wx-B1 et Wx-D1. Ces trois isoformes de la GBSS peuvent être séparées en fonction de leur poids moléculaire. Par ailleurs, elles présentent des propriétés structurales, chimiques et biochimiques différentes.

On a identifié quelques variétés de blé "partiel waxy" naturelles dans lesquelles une ou deux des isoenzymes sont inactives ou absentes. On appelle également "partiel waxy " les amidons issus de ce blé. Dans ces amidons "partiel waxy" la concentration en amylose est diminuée plus ou moins mais pas nulle, et dans certain cas la teneur en amylose reste quasiment inchangée par un phénomène de compensation.

Par contre, l'existence d'un mutant "full waxy" naturel est très improbable, puisqu'il faudrait une mutation récessive sur chacun des trois loci.

Une méthode de sélection a été développée et décrite (Toshiki Nakamura et al., Mol Gen Genet, 1995, n° 248, p. 253-259) pour l'obtention de blé hexaploïde full waxy. Elle consiste à croiser une variété de blé hexaploïde "partiel waxy" mutée sur les gènes A et B, Kanto 107, et une variété de blé hexaploïde "partiel waxy" mutée sur le gène D, Bai Huo. Un faible pourcentage des semences issues de ce croisement est full waxy et les générations issues de ces semences présentent le phénotype full waxy.

La méthode utilisée pour obtenir les produits utiles dans la présente invention consiste également à croiser deux variétés de blé hexaploïde, l'une double mutant aabbDD et l'autre mutant sur le génome D, AABBdd, mais adaptées à la culture occidentale. En effet, les principales variétés mutées sur l'un des gènes impliqués appartiennent à des variétés non adaptées à la culture occidentale, soit parce qu'il s'agit de variétés anciennes, très grandes, à faible rendement potentiel, soit parce qu'il s'agit de variétés d'autres pays qui ont du mal à s'adapter aux conditions occidentales. Il existe en Occident plusieurs variétés du type aabbDD, on peut citer entre autres IKE et ROSELLA.

On s'attendait à ce que les produits issus du blé full waxy présentent une faible viscosité et une texture élastique indésirables. Ce préjugé est en effet perpétué et véhiculé notamment dans la demande de brevet canadien n° 2 194 944 dans laquelle les farines de blé waxy ne sont utilisées que mélangées à des farines traditionnelles pour l'obtention d'un produit satisfaisant.

Or les produits issus du blé full waxy présentent, de façon inattendue, des caractéristiques particulièrement adaptées notamment aux produits alimentaires ou non alimentaires qui ont tendance à rétrograder sans qu'il soit nécessaire de les mélanger à des produits issus de blé traditionnel.

L'invention se rapporte donc à l'utilisation des produits issus de blé full waxy, notamment des farines de blé full waxy, des amidons de blé full waxy, des grains de blé full waxy.

On entend par farine, amidon, grain ou produit issus de blé full waxy, une farine, un amidon, un grain ou un produit issu de blé dont la teneur en amylose des granules d'amidon est non significative ou nulle, c'est à dire inférieure à 1%.

La teneur en amylose est déterminée par la méthode de la "blue value" décrite dans l'article paru dans "Starch / Stärke", volume 48, n°9 p. 338-344 de 1996, dont les auteurs sont Batey Ian et al., intitulé "Measurement of amylose / amylopectine ratio by high performance liquid chromatography".

Les farines de blé full waxy présentent une humidité comprise entre 9 et 15%, de préférence comprise entre 11 et 13%, un taux de protéines compris entre 9 et 20%, de préférence compris entre 12 et 16% par rapport à la matière sèche.

Les farines de blé full waxy présentent une humidité d'environ 13% et un taux de protéines d'environ 15,4%.

Le profil viscosimétrique de l'amidon ou de la farine de blé full waxy mesuré par Rapid Visco-Analyser ou RVA (4g à 14% $H_2O$ + 24,5 ml d'eau) présente une température de début de gélatinisation, autrement appelée "pasting" comprise entre 60 et 80°C, un pic compris entre 140 et 600 RVU (unité RVA), une chute de viscosité ou "breakdown" comprise entre 0 et 400 RVU et une viscosité finale comprise entre 0 et 300 RVU.

Le profil viscosimétrique de la farine de blé full waxy mesuré par RVA (4g à 14% $H_2O$ + 24,5 ml d'eau) présente une température de début de gélatinisation de 66,15°C, un pic de 284 RVU, une chute de viscosité de 177 RVU et une viscosité finale de 138 RVU. Le profil viscosimétrique de l'amidon de blé full waxy mesuré par RVA (4g à 14% $H_2O$ + 24,5 ml d'eau) présente une température de début de gélatinisation de 65,3°C, un pic de 351 RVU, une chute de viscosité de 224 RVU et une viscosité finale de 157 RVU.

A titre de comparaison, la viscosité finale d'une farine de blé traditionnelle est largement supérieure à la viscosité plateau du fait de la rétrogradation de l'amidon.

L'enthalpie mesurée pour la farine et l'amidon full waxy est comprise entre 5 et 15 J/g, et de préférence entre 8 et 13.

L'enthalpie pour la farine de blé full waxy est de 10,2 J/g et de 12,98 J/g pour l'amidon full waxy.

L'enthalpie est mesurée par DSC (Différentiel Scanning Calorimeter) selon le protocole suivant :

- Conditionnement : la cellule de référence contient de l'eau (850 mg). La prise d'échantillon est de 89 mg, complétée à 850 mg avec de l'eau. Le temps de conditionnement (mouillage de l'échantillon dans la cellule fermée à température ambiante) est de 1 heure.
- Cycle :

. Appareil micro DSC SETARAM III;
. Température de début 25°C;
. Chauffage jusqu'à 110°C à raison de 1,2°C/minute (vitesse maximale de l'appareil);
. Refroidissement à 25°C à raison de 3°C/minute.

Les résultats analytiques des farine et amidon full waxy, montrent que la farine et l'amidon présentent avantageusement, compte tenu de l'absence d'amylose, une absence de rétrogradation.

De plus, la farine issue de ce blé, compte tenu des protéines associées et d'autres composants, présente un comportement glaireux limité par rapport à l'amidon de blé full-waxy.

Cette farine et / ou cet amidon full waxy peuvent être utilisés tels quels dans l'industrie alimentaire et non alimentaire, c'est à dire sans les mélanger à des farines de blé traditionnelles.

Les farines de blé full waxy présentent avantageusement, notamment par rapport au maïs waxy, un goût plus neutre et une couleur plus blanche permettant un accès à un plus grand nombre d'applications.

Dans l'industrie alimentaire, ils permettent la préparation de produits qui peuvent se conserver sans évolution de la texture.

Les amidons full waxy extraits directement du blé full waxy ou extraits des farines de blé full waxy, permettent notamment une conservation de la neutralité organoleptique et de la translucidité.

Dans l'industrie non alimentaire, ces amidons et / ou ces farines de blé full waxy peuvent être avantageusement utilisés dans le domaine des cosmétiques, des peintures, des colles pour augmenter la cohésion de ces produits, ou comme substrat d'hydrolyse ou de fermentation.

L'utilisation des farines et / ou des amidons de blé full waxy permet d'obtenir :

- des produits de biscuiteries où la fèle est diminuée de façon significative;
- des produits de charcuterie dont la tenue et la texture sont améliorées, ce qui constitue un avantage pour des traitements de stérilisation;
- des aliments pour animaux qui présentent une forte rétention d'eau et une forte adhésivité, ce qui est avantageux pour la stabilité des produits;
- des sauces, plats cuisinés et produits laitiers où l'on peut obtenir, en léger surdosage de farine, des fonctionnalités de type résistance à des contraintes technologiques : cisaillement, acidité, cycle congélation / décongélation et traitement thermique identique aux amidons modifiés tout en conservant une déclaration "INGRÉDIENT";
- des produits "batters" et autres produits d'enrobage où l'adhésivité de la chapelure est améliorée et la fèle est diminuée lors de la conservation.

On peut citer également d'autres utilisations des farines et/ou amidons de blé full waxy comme :

- Substrat d'hydrolyse (chimique ou enzymatique) en vue de la production de malto-dextrines, puisqu'en offrant l'avantage de temps d'hydrolyse réduits, ils permettent d'améliorer le rendement de la production de malto-dextrines et leur confèrent un caractère non rétrogradant. Les maltodextrines ainsi obtenues peuvent servir, par exemple, à la confection de colles pour lesquelles on observe alors un maintien de la viscosité dans le temps du fait de la non rétrogradation. Les maltodextrines ainsi obtenues peuvent également être utilisées comme substitut de matière grasse dans les produits alimentaires, par exemple les mayonnaises. En effet, les maltodextrines issus de blé traditionnel, malgré l'hydrolyse, présentent toujours l'inconvénient de rétrograder, entraînant une augmentation progressive de la viscosité au cours du stockage, modifiant la texture et l'aspect du produit. Or les maltodextrines issues de l'hydrolyse de farines full waxy et / ou d'amidon full waxy pallient tous ces problèmes et participe à la stabilisation de l'émulsion.
- Substrat de fermentation dans la confection d'un milieu de culture, pour un meilleur rendement de production de biomasse.
- Substrat de fermentation dans la confection d'un milieu de culture pour un meilleur rendement de production de métabolites spécifiques, par exemples de l'acide lactiques ou de l'acide acétique. En effet, de façon surprenante, les farines et / ou les amidons de blé full waxy utilisés comme substrat favorisent la croissance de microorganismes (bactéries, levures) et permettent d'améliorer la productivité de métabolites spécifiques.

Des applications préférées des farines et/ou des amidons de blé full waxy sont résumées dans le tableau 1 ci-dessous.

Tableau 1

| Applications des farines et / ou amidons de l'invention | Fonctionnalités et avantages |
|---|---|

(suite)

| Biscuiterie | Diminution de la fèle |
|---|---|
| Sauces et plats cuisinés | Absence de rétrogradation, absence de synérèse => conservation |
| Alimentation animale | Forte rétention d'eau, forte adhésivité |
| Substrat d'hydrolyse, production de maltodextrines | Temps d'hydrolysé réduits, substituts de matière grasse, stabilisateurs d'émulsion. |
| Substrat de fermentation | Augmentation de la fermentation ⇒ Meilleur rendement lors de la production de biomasse ⇒ Production de métabolites |

La présente invention concerne des amidons et/ou des farines de blé full waxy obtenus par sélection ou génie génétique qui ont subi un traitement hydrothermique préalable en vue d'améliorer significativement leur fonctionnalité.

L'invention concerne donc aussi un procédé de préparation d'une farine de blé full waxy fonctionnelle comprenant la préparation, à partir de grains de blé full waxy, d'une farine de départ de granulométrie définie, caractérisé en ce que l'on soumet ladite farine à un traitement hydrothermique consistant en l'apport d'eau ou de vapeur et d'énergie thermique pour obtenir un degré de gélatinisation de l'amidon compris entre 15 et 99% et de préférence entre 20 et 80% en un temps très court, de l'ordre de 5 minutes. L'invention se rapporte aussi à une farine susceptible d'être obtenue par ce procédé.

L'invention concerne également un procédé de préparation d'un amidon de blé full waxy amélioré, caractérisé en ce que l'on soumet l'amidon extrait de grains de blé full waxy à un traitement hydrothermique consistant en l'apport d'eau ou de vapeur et d'énergie thermique pour obtenir un degré de gélatinisation de l'amidon compris entre 15 et 99%. L'invention se rapporte aussi à un amidon susceptible d'être obtenu par ce procédé.

Les farines et les amidons de blé full waxy ayant subi un traitement hydrothermique selon l'invention seront aussi désignées ci-après farines BFW-HT et amidons BFW-HT.

Il faut rappeler que les amidons waxy natifs présents sur le marché, sont issus du maïs essentiellement, et sont peu utilisés industriellement du fait des textures élastiques et « glaireuses ». Ils servent de substrat pour l'obtention d'amidons modifiés par réticulation ou stabilisation.

La réticulation consiste à introduire des liaisons chimiques dans le but d'augmenter la résistance de la granule.

La stabilisation consiste à introduire des macromolécules qui créent des répulsions interchaînes et empêchent la réassociation des chaînes de façon à limiter considérablement la synérèse.

Ces amidons modifiés présentent de bonnes fonctionnalités, mais sont soumis à une réglementation européenne spécifique prescrivant l'utilisation de la mention « ADDITIF » (ex : E1422) alors que la déclaration d'étiquetage des amidons natifs reste « INGREDIENT ».

La présente invention a donc également pour but d'offrir une farine BFW-HT ou un amidon BFW-HT qui présente des fonctionnalités équivalentes à celles des amidons modifiés pour certaines applications tout en bénéficiant d'une déclaration d'étiquetage INGREDIENT, et non ADDITIF, ce qui offre un avantage remarquable vis à vis de l'accueil du produit par les consommateurs.

Les farines et/ou amidons de blé full waxy présentent des avantages considérables qui sont encore améliorés par un traitement hydrothermique spécifique, donnant ainsi des farines BFW-HT ou des amidons BFW-HT, qui ont un niveau de fonctionnalité supérieur leur permettant de supplanter les amidons modifiés dans certaines applications. En effet, la farine BFW-HT présente un développement de viscosité significativement supérieur à celle de la farine de blé full waxy non traité thermiquement. Le gain de viscosité est conservé à l'issue du refroidissement et permet une utilisation comme ingrédient hautement fonctionnel. Le traitement thermique permet également d'inactiver les activités endogènes qui peuvent être présentes dans les farines et principalement l'activité amylasique. Il permet également de limiter le comportement glaireux souvent rencontré, notamment dans le maïs waxy, et d'apporter ou de mettre en exergue de nouvelles fonctionnalités de type viscosifiant.

Différents types de traitement thermique sont connus de l'homme du métier. Il existe deux voies principales qui permettent d'obtenir deux grandes classes de produits, et résumées dans le tableau 2 ci-dessous.

## EP 1 171 472 B2

Tableau 2.

|  | Technologies | Fonctionnalités |
|---|---|---|
| Produits instantanés<br>⇒ Pour procédé à froid<br>Ex : sauces instantanées | => Prégélatinisation (Ex : Cuisson extrusion, Jet cooker, Cylindres sécheur) | Développement rapide de la viscosité, instantanéisation<br>Bonne rétention d'eau |
| Produits à cuire<br>⇒ Pour procédé à chaud<br>Ex : sauce à cuire | => Heat/moisture treatment (correspondant à un traitement hydrothermique).<br>⇒ annealing (correspondant à un traitement hydrothermique plus doux et plus long) | Prégélatinisation partielle<br>Amélioration de la stabilité granulaire<br>Stabilité thermique et cisaillement |

Ainsi, on distingue d'abord les technologies dont le pourcentage d'eau utilisé par rapport à la matière sèche, amidon ou farine, est très important et la température très supérieure à la température de gélatinisation (exemple : échangeur à surface raclée, jet cooker, cylindre sécheur, cuiseur extrudeur). Elles sont utilisées pour la réalisation de produits dits « instants ». Ces produits sont chauffés à haute température pour gélatiniser au maximum les amidons. Lors de leur mise en oeuvre dans une formulation, une phase de cuisson n'est plus nécessaire. Ils conviennent particulièrement au procédé à froid, par exemple aux soupes ou sauces instantanées.

Il faut également distinguer les technologies plus douces visant à prégélatiniser partiellement l'amidon ou à modifier sa structure granulaire et améliorer sa stabilité à des contraintes de type cisaillement et traitement thermique ("heat moisture treatment" et "annealing"). Lors de leur mise en oeuvre, une étape de cuisson est nécessaire pour développer leur viscosité.

Des essais réalisés en cuisson extrusion ont permis la réalisation de farines instants à base de farine de blé full waxy. Les farines ayant subit ce traitement présentent une forte adhésivité limitant les applications alimentaires. Par contre, elles peuvent être avantageusement utilisées en alimentation animale (croquettes sèches ou granulés) pour améliorer la dureté et durabilité et limitant ainsi les freintes (ou pertes) lors du procédé de granulation.

Comme indiqué précédemment, l'invention se rapporte aussi à une farine et/ou un amidon de blé full waxy ayant subi un traitement thermique selon l'une des techniques mentionnées précédemment. Un procédé préféré selon l'invention pour obtenir de telles farine ou amidon consiste à faire subir à une farine et/ou un amidon de blé full waxy un traitement hydrothermique et un séchage pour une prégélatinisation partielle, permettant de modifier la structure cristalline de l'amidon de façon à développer des viscosités supérieures compétitives à certains amidons modifiés.

Les étapes de traitement hydrothermique et de séchage sont caractérisées en ce que l'on apporte à la farine et / ou à l'amidon de l'eau ou de la vapeur et de l'énergie thermique pour obtenir un degré de gélatinisation de l'amidon compris entre 15 et 99 % et de préférence entre 20 et 80 % en un temps très court, avantageusement inférieur ou égal à 5 minutes. Les étapes de traitement hydrothermique et de séchage selon le procédé sont réalisées à des températures comprises entre 210 et 250°C et de préférence de l'ordre de 220°C, pendant une durée inférieure à environ 5 minutes.

Différents matériels et méthodes peuvent être mis en oeuvre pour les étapes de traitement hydrothermique et de séchage du procédé. On peut citer par exemple, le cuiseur extrudeur présentant une forte dégradation de l'amidon, les tambours sécheurs, le jet cooking, les échangeurs à surface raclée, et l'atomisation d'un empois d'amidon. Parmi ceux-ci, on préfère une technique habituellement utilisée pour débactériser des sons, des germes et des farines, et pour sécher et prégélatiniser des farines, basée sur la mise en suspension du produit en haute turbulence dans un courant d'air chauffé et en contact permanent avec une surface également chauffée.

Un dispositif pour la mise en oeuvre de cette technique comporte deux parties, un cuiseur et un sécheur, chacun constitué d'un cylindre horizontal où une hélice horizontale permet de maintenir le produit contre les parois par centrifugation. Un circuit d'huile thermique assure le chauffage des cylindres grâce à un manteau coaxial. Le cuiseur peut recevoir de l'eau et/ou vapeur et divers autres additifs. Ainsi sous l'effet de l'eau associé à l'apport d'énergie thermique, les propriétés rhéologiques (viscosité, capacité d'absorption) de l'amidon ne sont plus les mêmes. Le produit est ensuite transféré dans le sécheur, où de l'air chauffé via un échangeur de chaleur est injecté dans le cylindre. Le produit est alors séché par conduction (parois chauffées) et par convection (air chauffé). Les principaux paramètres à réguler sont les débits matières et eau, les temps de séjour et les températures utilisées.

L'étape de traitement hydrothermique suivie de l'étape de séchage du procédé de l'invention sont donc avantageusement réalisées par mise en suspension de la farine et/ou de l'amidon en haute turbulence dans un courant d'air chauffé et en contact permanent avec une surface également chauffée, en apportant de l'eau ou de la vapeur.

L'invention se rapporte donc également aux farines et/ou amidons BFW-HT. Elles sont remarquables car elles présentent une coloration non modifiée par le traitement, une inactivation enzymatique et de remarquables fonctionnalités les rendant compétitives des amidons natifs et des amidons modifiés pour certaines applications.

<u>Les farines BFW-HT obtenues présentent les caractéristiques suivantes :</u>

- Humidité : 3 à 12%
- Protéine (% / matière sèche) : 10 à 16%

Le degré de gélatinisation, est fonction de l'intensité du traitement thermique, il est compris : compris entre 15 et 99% et de préférence entre 20 et 80%.

Selon un mode préféré de l'invention, le profil viscosimétrique de la farine BFW-HT mesuré par RVA (4g à 14% $H_2O$ + 24,5 ml d'eau) présente une température de début de gélatinisation de 64,55°C, un pic de 479 RVU, une chute de viscosité de 309 RVU et une viscosité finale de 223 RVU.

Dans un mode préféré de l'invention l'enthalpie mesurée par DSC pour la farine BFW-HT, selon le protocole décrit précédemment, est de 7,7 J/g.

Les farines et / ou amidons de blé BFW-HT peuvent être utilisées dans l'industrie alimentaire. En effet, ces farines et / ou amidons possèdent d'excellentes propriétés viscosifiantes, liantes, sans rétrogradation lors du refroidissement.

De façon surprenante, les farines et / ou amidons de blé BFW-HT participent à stabiliser les émulsions, notamment les sauces émulsifiées ou les produits de charcuterie.

Ils présentent également une synérèse limitée du fait de l'absence de gélification, du fait de l'absence d'amylose, un très bon comportement vis-à-vis de la température, des faibles pH ainsi que pour de faibles niveaux de cisaillement. Et du fait qu'ils constituent un ingrédient base blé, les farines et/ou amidons BFW-HT n'apportent ni couleur, ni goût parasite.

Ils peuvent donc selon les applications se substituer soit aux amidons natifs soit aux amidons modifiés. Ils présentent les avantages suivants selon les applications rapportées dans le tableau 3 ci-dessous.

Tableau 3

| Applications des farines et ou amidons de l'invention | Fonctionnalités et avantages |
|---|---|
| Snacks et autres produits extrudés | Augmentation de l'expansion<br>Amélioration du fondant et perception organoleptique |
| Sauces et plats cuisinés | Absence de rétrogradation, absence de synérèse<br>Amélioration de la texture et perception organoleptique |
| Produits laitiers et desserts | Viscosité et résistance aux contraintes technologiques et absence de synérèse |
| Charcuterie et aliments pour animaux | Amélioration de la tenue et la texture<br>Meilleure rétention d'eau, augmentation du rendement technologique |
| Produits de panification et viennoiserie | Amélioration de l'alvéolage, augmentation de l'hydratation, meilleure conservation |
| Pâtisseries | Amélioration de la tenue et de la texture |
| Substrat d'hydrolyse, production de malto-dextrines | Temps d'hydrolyse réduits, substituts de matière grasse, stabilisateurs d'émulsion. |
| Substrat de fermentation | Augmentation de la fermentation<br>⇒ Meilleur rendement lors de la production de biomasse<br>⇒ Production de métabolites |

L'invention concerne donc également l'utilisation de la farine BFW-HT comme ingrédient, en particulier comme produit de substitution de farines non traitées et / ou d'amidons natifs et / ou modifiés, pour la fabrication de produits alimentaires, et plus particulièrement pour la fabrication de snacks et autres produits extrudés, de panification et de viennoiserie, de charcuterie, d'aliments pour animaux, de sauces et plats cuisinés, ou de produits laitiers.

Comme indiqué dans le tableau 3 ci-dessus, l'utilisation des farines BFW-HT de l'invention permet d'obtenir :

- des snacks et autres produits extrudés présentant une amélioration de l'expansion, du fondant, de la perception organoleptique,
- des produits de panification et de viennoiserie qui présentent une amélioration de l'alvéolage, une augmentation de l'hydratation et une meilleure conservation;

- des produits de charcuterie et des aliments pour animaux dont la tenue et la texture sont améliorées, ce qui constitue un avantage pour des traitements de stérilisation. On note également une meilleure rétention d'eau et une augmentation du rendement technologique;

- des sauces, plats cuisinés, produits laitiers et desserts pour lesquels on peut obtenir, en léger surdosage de farine, des fonctionnalités de type résistance à des contraintes technologiques : cycles congélation / décongélation, cisaillement, acidité et traitement thermique identique aux amidons modifiés tout en conservant une déclaration "INGRÉDIENT". On observe pour ce produits une absence de rétrogradation, une absence de synérèse en même temps qu'une amélioration de la texture et de la perception organoleptique.

Les farines et / ou amidons BFW-HT peuvent également servir de :

- Substrat d'hydrolyse (chimique ou enzymatique) en vue de la production de malto-dextrines, puisqu'en offrant l'avantage de temps d'hydrolyse réduits, ils permettent d'améliorer le rendement de la production de malto-dextrines et leur confèrent un caractère non rétrogradant. Les maltodextrines ainsi obtenues peuvent servir, par exemple, à la confection de colles pour lesquelles on observe alors un maintien de la viscosité dans le temps du fait de la non rétrogradation. Les maltodextrines ainsi obtenues peuvent également être utilisées comme substitut de matière grasse dans les produits alimentaires, par exemple les mayonnaises. En effet, les maltodextrines issus de blé traditionnel, malgré l'hydrolyse, présentent toujours l'inconvénient de rétrograder, entraînant une augmentation progressive de la viscosité au cours du stockage, modifiant la texture et l'aspect du produit. Or les maltodextrines issues de l'hydrolyse de farines et / ou d'amidon BFW-HT pallient tous ces problèmes et participe à la stabilisation de l'émulsion.

- Substrat de fermentation dans la confection d'un milieu de culture, pour un meilleur rendement de production de biomasse.

- Substrat de fermentation dans la confection d'un milieu de culture pour un meilleur rendement de production de métabolites spécifiques, par exemples de l'acide lactique ou, de l'acide acétique. En effet, de façon surprenante, les farines et / ou les amidons BFW-HT utilisées comme substrat favorisent la croissance de microorganismes (bactéries, levures) et permettent d'améliorer la productivité de métabolites spécifiques.

L'invention envisage toute particulièrement l'utilisation d'une farine, d'un amidon BFW-HT ou d'un mélange de ceux-ci pour la fabrication de snacks et autres produits extrudés, de produits alimentaires de biscuiterie, de panification et de viennoiserie, de charcuterie, d'aliments pour animaux, de sauces et plats cuisinés, de produits laitiers, de batters, ou de produits non alimentaires tels que les colles, les peintures, les produits cosmétiques. L'invention envisage également toute particulièrement l'utilisation d'une farine, d'un amidon BFW-HT ou d'un mélange de ceux-ci comme substrat d'hydrolyse ou comme substrat de fermentation.

L'invention a donc encore pour objet des produits alimentaires tels que snacks et autres produits extrudés, des produits alimentaires de biscuiterie, de panification, de viennoiserie, de charcuterie, des aliments pour animaux, des sauces et plats cuisinés, des produits laitiers et desserts contenant une farine et/ou un amidon BFW-HT selon l'invention.

Ainsi l'utilisation de la farine BFW-HT et / ou d'amidon BFW-HT permet d'obtenir une sauce de viscosité comparable à celle réalisée avec des amidons modifiés (réticulés et stabilisés).

A titre d'exemple, la sauce Béchamel préparée à partir de farine BFW-HT, présente une texture fluide non rétrogradée, homogène lisse et sans synérèse. L'utilisation d'une telle farine permet de garantir une parfaite reproductibilité des sauces réalisées et permet de conserver l'authenticité d'une sauce Béchamel traditionnellement réalisée par la ménagère avec une farine de blé. De plus, la farine BFW-HT permet, à fonctionnalités égales avec un amidon modifié, de bénéficier d'une déclaration « Ingrédient » et non « additif », critère recherché par les consommateurs.

L'invention concerne également un dispositif pour la réalisation des étapes de traitement hydrothermique et de séchage, qui comprend :

- un cuiseur constitué d'un cylindre horizontal où une hélice horizontale permet de maintenir le produit contre les parois par centrifugation, pouvant recevoir de l'eau et / ou de la vapeur;

- un sécheur constitué d'un cylindre horizontal où une hélice horizontale permet de maintenir le produit contre les parois par centrifugation et ou de l'air chauffé via un échangeur de chaleur est injecté;

- un circuit, comme un circuit d'huile thermique assurant le chauffage des cylindres grâce à un manteau coaxial.

D'autres exemples et avantages de l'invention apparaîtront dans les exemples qui suivent concernant notamment l'utilisation de farines et/ou d'amidons de blé full waxy, le procédé de l'invention et les farines et amidons BFW-HT obtenus et leurs utilisations. Il sera fait référence dans ce qui suit aux dessins en annexe dans lesquels :

La figure 1 représente les courbes de viscosité RVA de farine et amidon de blé full waxy.

La figure 2 représente les courbes de DSC de farine et amidon de blé full waxy.

La figure 3 représente les courbes de viscosité RVA de farine de blé full waxy native et de farine BFW-HT.

La figure 4 représente les courbes de DSC de farine de blé full waxy native et de farine BFW-HT.

La figure 5 représente les courbes des propriétés d'écoulement de l'amidon modifié (E1422) et de Farine BFW-HT de sauces béchamel congelées.

La figure 6 représente les courbes des propriétés d'écoulement de l'amidon modifié (E1422) et de Farine BFW-HT de sauces tomates pasteurisées.

Exemple n° 1 : Farines et amidons de blé full waxy. (comparatif)

Une farine de blé full waxy est obtenue par mouture sur cylindre de grains de blé Full Waxy obtenu par croisement d'un blé aabbDD d'une variété IKE et d'une lignée possédant l'allèle AABBdd de la variété Bai Huo. Elle présente les caractéristiques suivantes :

- Humidité : 13%
- Protéine (% / matière sèche) : 15,4%

Le profil viscosimétrique de cette farine ou de l'amidon extrait et mesurés au RVA (4g à 14% H2O + 24,5 ml d'eau) sont les suivants :

■ Résultats RVA

|  | Température de début de gélatinisat ion °C | Pic RVU | Chute de viscosité RVU | Viscosité Finale RVU |
|---|---|---|---|---|
| Farine de blé full waxy | 66,15 | 284 | 177 | 138 |
| Amidon extrait de blé full waxy | 65,3 | 351 | 224 | 157 |

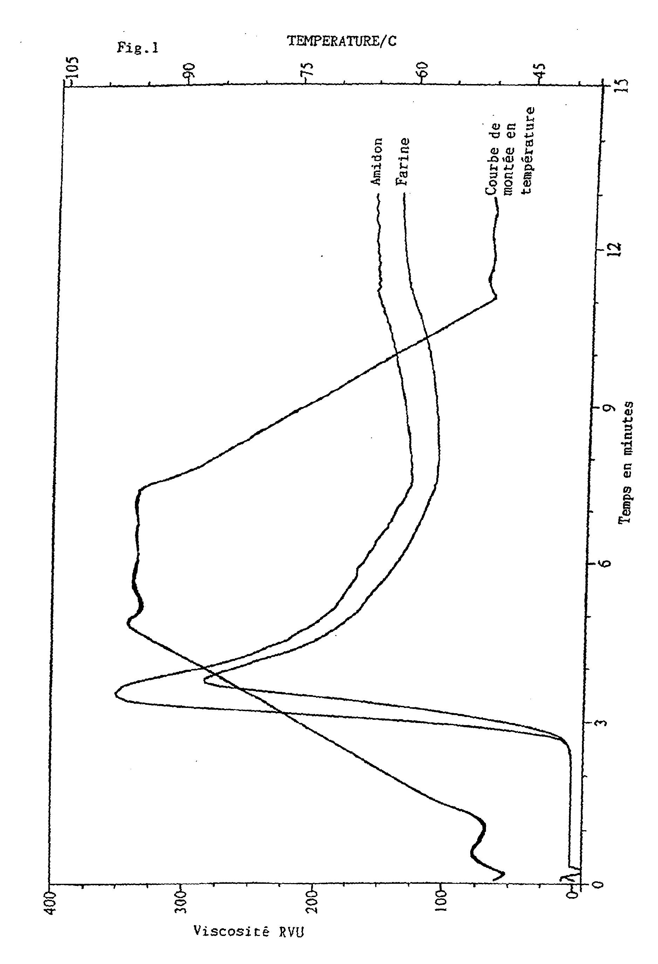

Les courbes de la Figure 1 représentent la viscosité RVA : farine et amidon de blé full waxy.

■ Résultats DSC

|  | Pic 1 | | | Pic 2 (complexe amylose - lipide) | | |
|---|---|---|---|---|---|---|
|  | T°C de changement d'état de l'amidon | Température de pic °C | Enthalpie J/g | Onset point | Temp. pic | Enthalpie J/g |
| Farine full waxy | 62,86 | 68,54 | 10,2 | Pas d'amylose | | |
| Amidon full waxy | 59,27 | 65,93 | 12,98 | Pas d'amylose | | |

L'absence du deuxième pic, normalement observé pour la farine de blé traditionnelle, est bien révélatrice de l'absence d'amylose.

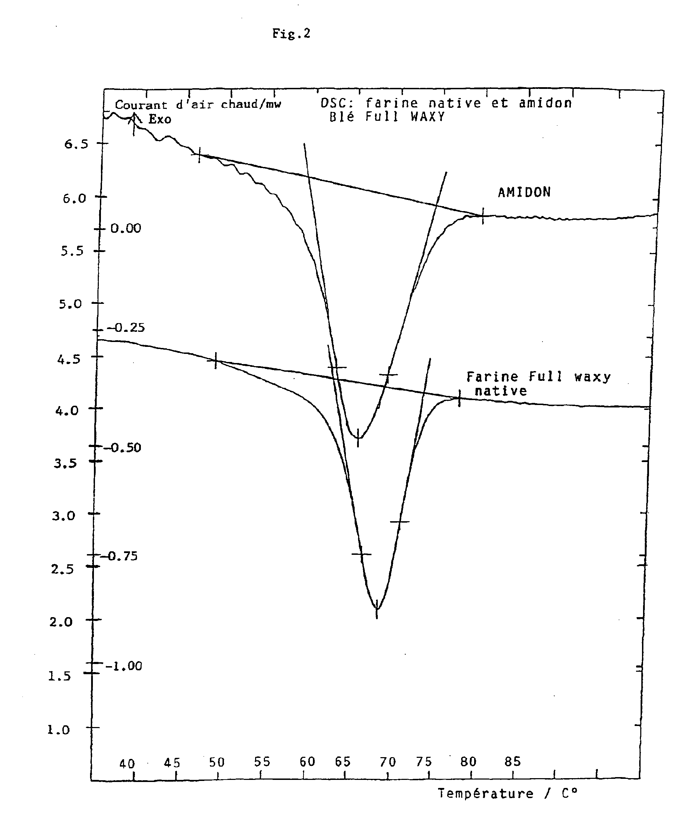

Les courbes de la figure 2 représentent les résultats DSC farine et amidon de blé full waxy.

■ Dosage de l'amylose (blue value)

La teneur en amylose en déterminée par la méthode de la « blue value » : Iodine détermination of amylose content référencée par Batey Ian et al, Starch / Stärke 48 (1996), n°9, p 338-344. La teneur en amylose pour l'amidon et la farine de blé full waxy = 0% (par rapport à la matière sèche), la tolérance de la méthode étant de +/- 1%.

Exemple n° 3 : Obtention d'une farine BFW-HT et résultats comparatifs.

Choix de la farine issue d'une variété de blé full waxy de l'exemple 1.

Traitement thermique pour modifier et obtenir la structure cristalline optimale. Les paramètres sont rapportés dans le tableau 4 ci-dessous.

Tableau 4

| | |
|---|---|
| température cuiseur | 200 à 250°C |
| débit matière | 100 kg/h |
| % eau / débit matière | 8 % |
| température sécheur | 200 à 220°C |

La farine obtenue est broyée et/ou tamisée, de préférence à 250μ pour limiter la perception granuleuse en bouche.

La farine BFW-HT ainsi obtenue présente les caractéristiques suivantes :

- Humidité : comprise entre 4 et 12%
- granulométrie voisine de 150μ

■ Résultats comparatifs RVA.

Les profils viscosimétriques de la farine de blé full waxy native et farine BFW-HT mesurés au RVA (4g à 14% H2O + 24,5 ml d'eau) sont les suivants :

| | Température de début de gélatinisation °C | Pic RVU | Chute de viscosité RVU | Viscosité Finale RVU |
|---|---|---|---|---|
| Farine de blé Full waxy native | 66,15 | 284 | 177 | 138 |
| Farine BFW-HT | 64,55 | 479 | 309 | 223 |

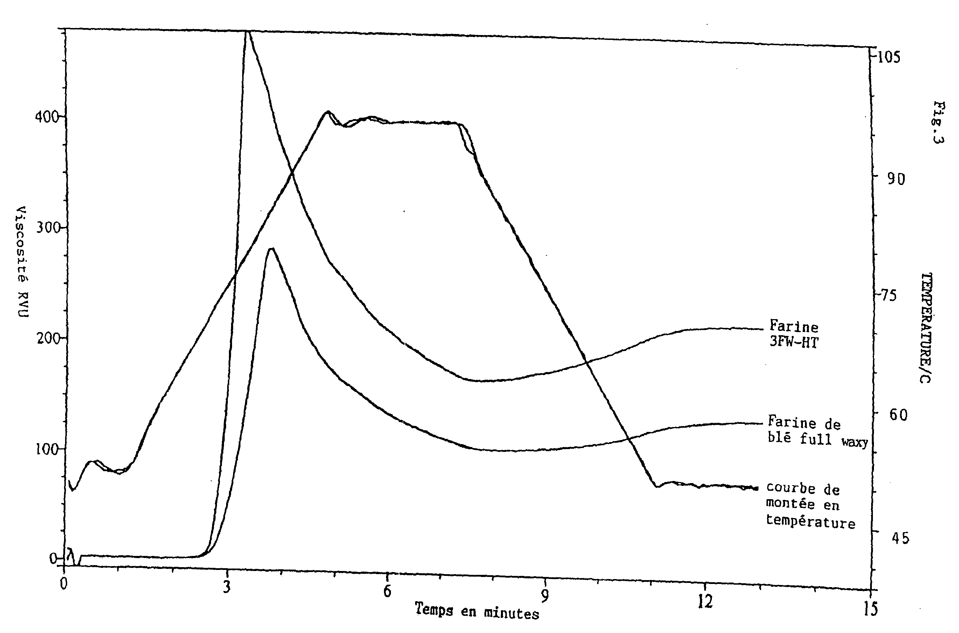

Les courbes de la Figure 3 représentent la viscosité RVA : farine de blé full waxy native et farine BFW-HT.

La farine HT présente un développement de viscosité significativement supérieur à celle de la farine de blé full waxy native. Le gain de viscosité est conservé à l'issue du refroidissement et permet une utilisation comme ingrédient hautement fonctionnel.

■ Résultats comparatifs RVA.

| | Pic 1 | | | Pic 2 (complexe amylose - lipide) | | |
|---|---|---|---|---|---|---|
| | T°C de changement d'état de l'amidon | Température de pic | Enthalpie J/g | Onset point | Temp. pic | Enthalpie J/g |
| Farine blé full waxy | 62,86 | 68,54 | 10,2 | Pas d'amylose | | |
| Farine BFW-HT | 61,26 | 67,54 | 7,7 | Pas d'amylose | | |

L'absence du deuxième pic normalement observé pour la farine de blé traditionnelle est bien révélatrice de l'absence d'amylose.

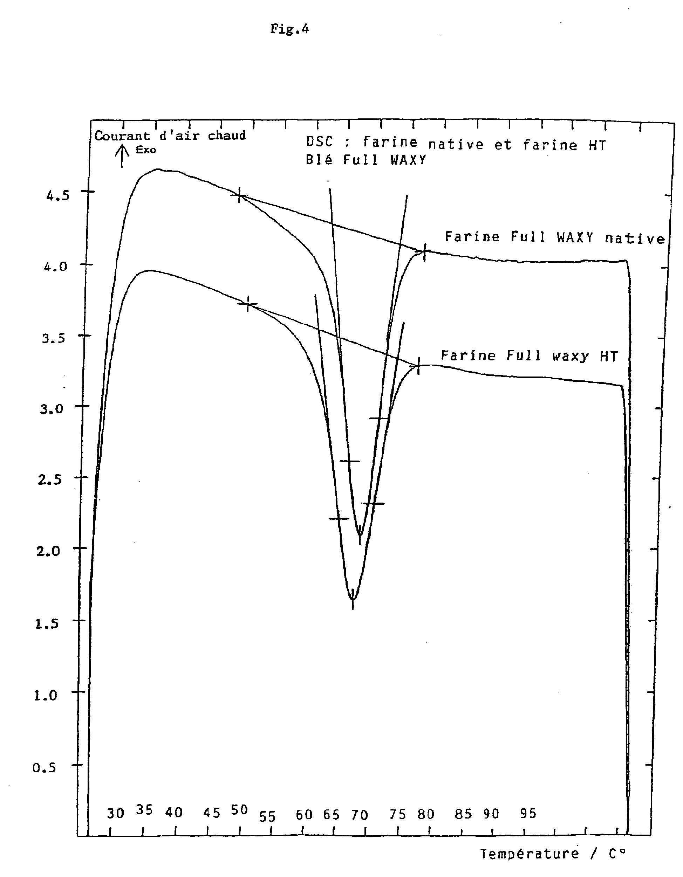

Les courbes de la Figure 4 représentent la DSC : farine de blé full waxy native et farine BFW-HT.

■ Degré de gélatinisation

Le degré de gélatinisation est déterminé par le rapports des enthalpies mesurées par DSC selon la publication de P. Chinachoti et al. (Journal of Food Science, vol 55, n°2 1990, pages 543 et suivantes). Le degré de gélatinisation est calculé par DSC (Différentiel Scanning Calorimeter) dont le principe est basé sur la mesure d'énergie d'un changement induit par une variation de température. Il est calculé selon l'équation suivante :

$$DG = 1 - \frac{\text{Enthalpie produit traité thermiquement}}{\text{Enthalpie produit natif}} \times 100$$

Soit,

$$(1 - (7,7/10,2)) \times 100 = 24,5\ \%$$

Les exemples ci-après d'utilisation de la farine de l'exemple n° 3 sont choisis pour illustrer les différentes utilisations et marchés cibles pouvant contenir la farine et / ou l'amidon BFW-HT.

Exemple n°4 : Utilisation de farine BFW-HT pour les snacks et autres produits d'extrusion.

Des snacks sont réalisés avec les formules suivantes :

|  | Snack de l'invention | Témoin |
|---|---|---|
| Farine blé normale | 67,5 | 97,5 |
| Farine BFW-HT | 30 | - |
| Sel | 2 | 2 |
| Monoglycéride | 0,5 | 0,5 |

Le mélange est extrudé sur BC45 avec une configuration spécifique pour une expansion directe (pas dégressif et contre filet en dernière position) et filières cylindriques pour la réalisation de boules. Les 2 mélanges sont extrudés dans les mêmes conditions à des températures de 100°C. Les produits sont découpés en sortie de filière. Après refroidissement, les densités des snacks sont mesurées et les snacks dégustés.

|  | Farine BFW-HT | Farine de Blé normal |
|---|---|---|
| Densité des snacks | 43g/l +/- 2 | 55g/l +/- 4 |
| Niveau d'expansion | supérieur | normal |

Les résultats obtenus montrent que l'utilisation d'une farine BFW-HT, utilisée en complément d'une farine traditionnelle, permet d'augmenter de façon significative le niveau d'expansion. Utilisé dans ces conditions à des concentrations supérieures à 30% , une perception de collant en bouche limite son utilisation. Dans tous les cas, le niveau d'expansion est supérieur.

Exemple n° 5 : Application charcuterie.

Une formulation de saucisses pour choucroute stérilisée est rapportée dans le tableau ci-dessous.

Tableau 5

|  | Témoin (en %) | Saucisse de l'invention (en %) |
|---|---|---|
| viande de porc séparée mécaniquement | 10 | 10 |

(suite)

|  | Témoin (en %) | Saucisse de l'invention (en %) |
|---|---|---|
| purée de Couenne | 5 | 5 |
| boeuf fabrication | 18 | 18 |
| jarret de porc | 12 | 12 |
| gras dur | 30 | 30 |
| glace | 19 | 19 |
| caséinates | 1 | 1 |
| sel nitrité | 0,8 | 0,8 |
| phosphates | 0,3 | 0,3 |
| tradirose | 0,4 | 0,4 |
| épices | 0,5 | 0,5 |
| fécule de pomme de terre (témoin) | 3 | - |
| Farine BFW-HT | - | 2 |

Les ingrédients secs et la glace sont incorporés dans une grande "cutter" auxquels le gras est progressivement incorporé pour créer l'émulsion. Dix tours de cutter sont nécessaires pour arriver à un cutterage classique des pâtes fines. La pâte présente alors une température voisine de 10°C. Elle est ensuite poussée à travers un boyau Nojax de 22 mm et portionnée. L'étape de cuisson est réalisée en plusieurs cycles pré-cuisson, fumage, cuisson et douchage.

Les saucisses sont alors mises en bocaux avec la choucroute à pH acide (environ 4) puis stérilisées pendant 30 minutes à 115°C.

Les saucisses sont évaluées à J + 10 jours sur des critères de tenue d'émulsion, de rendement technologique permettant de visualiser la perte de poids, l'apparence et la texture en bouche. Les résultats de cette évaluation sont rapportés dans le tableau 6 ci-dessous.

Tableau 6

| Évaluation à J+10 | Témoin | Saucisse de l'invention |
|---|---|---|
| Mise en oeuvre et tenue de l'émulsion | = | = |
| Apparence | = | = |
| Rendement après stérilisation : = (masse après - masse avant)/masse avant | 102 | 106 |
| Analyse sensorielle - fermeté au toucher - fermeté en bouche | 5/10 4/10 | 8/10 6/10 |

Le rendement après stérilisation n'est pas significativement différent.

L'utilisation de la farine BFW-HT, permet, même à des faibles concentrations, de stabiliser l'émulsion et d'apporter une viscosité finale à la saucisse identique à la viscosité développée par un amidon natif. De plus, cette farine BFW-HT permet de mieux résister aux 2 traitements thermiques successifs (cuisson + stérilisation) dans un environnement acide défavorable. Les mêmes rendements sont obtenus, mais surtout, la farine BFW-HT apporte un gain de fermeté, principal critère de qualité recherché pour les saucisses à pâte fine. De plus, l'emploi d'un ingrédient base blé n'apporte ni couleur, ni goût parasite.

Exemple 6 : Applications Sauces et Plats cuisinés (substitution d'amidon modifié).

Une formulation "Sauce béchamel" à congeler selon le tableau 7 ci-dessous.

Tableau 7

|  | Témoin (en %) | Sauce de l'invention (en %) |
|---|---|---|
| amidon modifié : COLFLO™ - E1422 | 3 | - |
| Farine BFW-HT | - | 4 |
| sel | 0,9 | 0,9 |
| beurre | 3,4 | 3,4 |
| crème épaisse | 7,7 | 7,7 |
| eau | 85 | 84 |

Les ingrédients secs sont mélangés, puis l'eau est ajoutée au fouet. Le mélange est porté à ébullition à l'aide d'un mélangeur chauffant (type saucier) . Le cisaillement réalisé permet de mimer en partie les cisaillements rencontrés dans les procédés industriels. L'ébullition est maintenue 5 minutes. De l'eau est ajoutée pour respecter la formulation. Les sauces Béchamel sont mises en pot stockées à -18°C. Les produits sont évalués avant et après un cycle de congélation de 2 semaines. L'évaluation est réalisée sur des critères de viscosités à l'aide d'un rhéomètre (mesure des propriétés d'écoulement entre 1 et 500 s-1 en 5 minutes avec un Carimed CSL 100 avec un cône de 4 cm - 4 degré et à une température de 40°C) et par un jury d'analyse sensorielle évaluant la texture en bouche et la couleur. Les résultats sont rapportés dans le tableau 8 suivant.

Tableau 8

|  | témoin | Sauce de l'invention |
|---|---|---|
| Aspect | Absence de rétrogradation Absence de synérèse | |
| Viscosité (mesure d'écoulement - voir courbes) | = | = |
| Analyse sensorielle<br>- Couleur<br>- texture en bouche | Translucide homogène | Blanche Homogène, onctueuse |

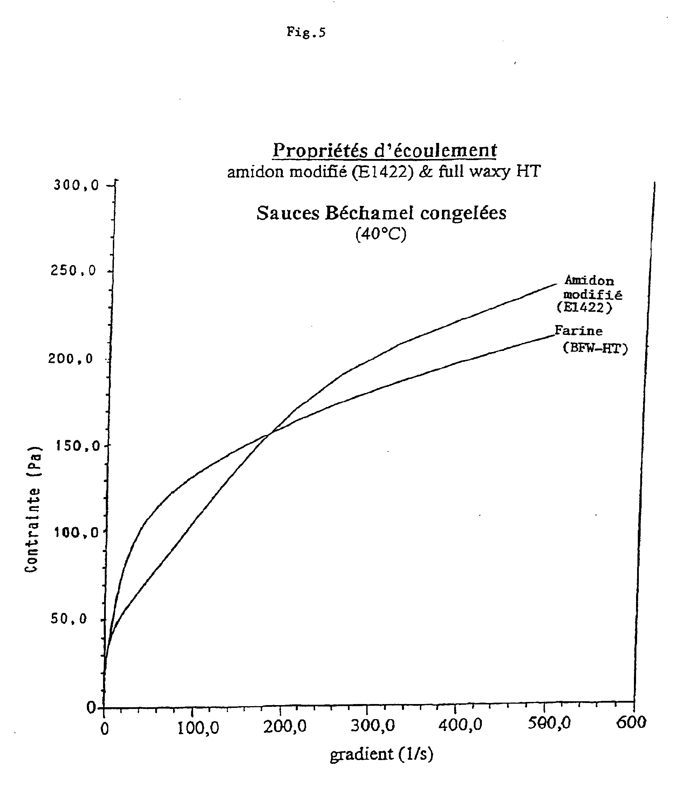

Les courbes de la Figure 5 montrent les propriétés d'écoulement : amidon modifié (E1422) et Farine BFW-HT.
L'utilisation de la farine BFW-HT permet d'obtenir une sauce de viscosité comparable à celle réalisée avec des amidons modifiés (réticulés et stabilisés). La sauce Béchamel présente une texture fluide non rétrogradée, homogène lisse, sans synérèse, qui résiste aux cycles congélation / décongélation. L'utilisation d'une telle farine permet de garantir une parfaite reproductibilité des sauces réalisées et permet de conserver l'authenticité d'une sauce Béchamel traditionnellement réalisée par la ménagère avec une farine de blé. De plus, la farine BFW-HT permet à fonctionnalités égales avec un amidon modifié de bénéficier d'une déclaration « Ingrédient » et non « additif », critère recherché par les consommateurs.

Exemple 7 : Application sauce tomate pasteurisée.

Une formulation sauce tomate pasteurisée est rapportée dans le tableau 9 suivant.

Tableau 9

|  | Témoin en % | Sauce de l'invention (en %) |
|---|---|---|
| Amidon modifié (Colflo® 67 - E1422) | 3 | - |
| Farine BFW-HT | - | 4 |
| Sel | 0,9 | 0,9 |
| Concentré de tomate | 13,3 | 13,3 |
| Huile | 8,1 | 8,1 |
| eau | 74,7 | 73,7 |

Les ingrédients secs sont mélangés, puis l'eau et le concentré de tomate sont ajoutés au fouet. Le mélange est porté à ébullition à l'aide d'un mélangeur chauffant (type saucier). Le cisaillement réalisé permet de mimer en partie les cisaillements rencontrés dans les procédés industriels. L'ébullition est maintenue 5 minutes. De l'eau est ajoutée pour respecter la formulation. Les sauces Tomates sont mises en pot et pasteurisée 1 heure à 100°C à l'aide d'un pasteurisateur.

Les produits sont évalués après 7 jours de stockage à 4°C (accélération du processus de rétrogradation) et après 1 mois à température ambiante. L'évaluation est réalisée sur des critères de viscosités à l'aide d'un rhéomètre (mesure des propriétés d'écoulement entre 1 et 500 s-1 en 5 minutes avec un Carimed CSL 100 avec un cône de 4 cm - 4 degré et à une température de 40°C) et par un jury d'analyse sensorielle évaluant la texture en bouche et la couleur. Les résultats sont rapportés dans le tableau suivant.

Tableau 10

|  | Témoin | Sauce de l'invention Après 7 j à 4°C | Sauce de l'invention Après 1 mois à température ambiante |
|---|---|---|---|
| Aspect | Pas de rétrogradation Texture non gélifiée, très fluide | | |
| Propriétés stabilisantes | Exsudation d'huile à la surface | Stabilisant d'émulsion Très homogène | |
| Viscosité (mesure d'écoulement - voir courbes) | = | = | = |
| Analyse sensorielle - Couleur - texture en bouche | Translucide Homogène | Légèrement plus opaque et plus clair. Homogène, onctueux | Légèrement plus opaque et plus clair. Homogène, onctueux |

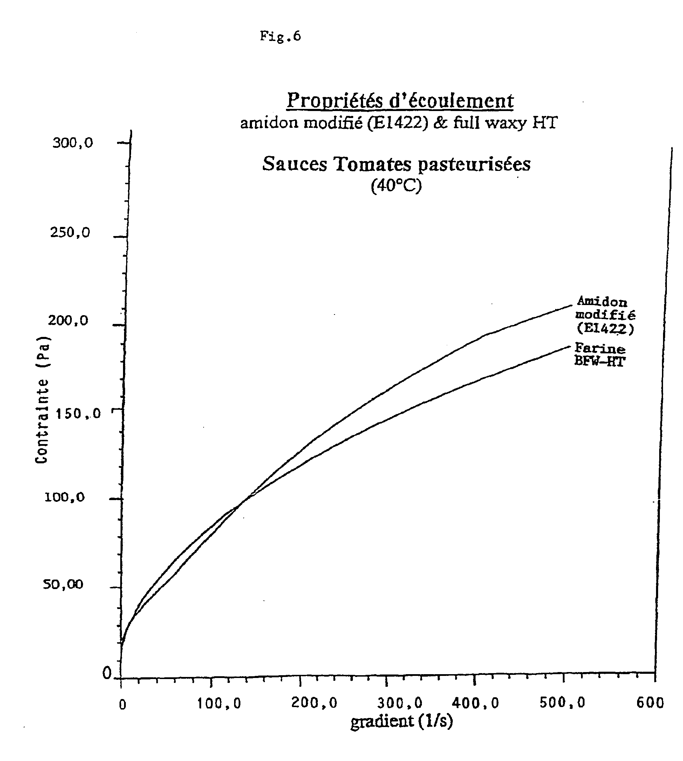

Les courbes de la Figure 6 représentent les propriétés d'écoulement : amidon modifié (E1422) et farine BFW-HT.

L'utilisation de la farine BFW-HT permet d'obtenir une sauce de viscosité comparable à celle réalisée avec des amidons modifiés (réticulés et stabilisés). La sauce Tomate présente une texture fluide non rétrogradée, homogène lisse et sans synérèse. L'utilisation d'une telle farine, dans des conditions acides - pH : 4) permet de garantir une parfaite reproductibilité des sauces réalisées. De plus, la farine BFW-HT permet à fonctionnalités égales avec un amidon modifié de bénéficier d'une déclaration « Ingrédient » et non « additif », critère recherché par les consommateurs. Comme il n'a pas été observé de relargage d'huile, la farine de l'invention permet également dans une sauce tomate à pH : 4 de mieux stabiliser l'émulsion que l'amidon modifié. Cet exemple met en évidence une nouvelle fonctionnalité de ce type de farine inconnue à ce jour.

Exemple 9 : Application à la soupe aux champignons.

Une formulation de soupe aux champignons est rapportée dans le tableau 11 ci-dessous.

Tableau 11

| Farine BFW-HT | 6% |
|---|---|
| Eau | 77,18% |
| Champignons coupés en lamelles | 10% |
| Crème fraîche épaisse | 2,5% |
| Concentré de champignons | 2,25% |
| Crème en poudre | 1% |
| Caséinates de sodium | 1% |
| Epices | 0,05% |
| Poivre blanc moulu | 0,02% |

Les ingrédients secs sont mélangés avec l'eau et le concentré de champignons est ajouté. Le mélange est chauffé à 85°C. La crème fraîche et les champignons en lamelles sont rajoutés. Les soupes sont mises en pot et pasteurisées 1 heure à 120°C.

Après une semaine, conservés à température ambiante, les pots sont ouverts et les soupes examinées. Elles présentent une texture fluide non rétrogradée, homogène, lisse et sans synérèse, et après l'avoir réchauffée leur goût et leur saveur sont comparables à ceux d'une soupe fraîchement préparée.

A titre de comparaison, en remplaçant la farine BFW-HT par :

- de la farine de blé traditionnelle, et après une semaine de conservation dans les mêmes conditions, la soupe se présente sous forme de gel solide, qui ne s'écoule pas des pots, cette perte de fluidité étant due à la rétrogradation de l'amylose.
- de l'amidon modifié, et après une semaine de conservation dans les mêmes conditions, la soupe présente une texture fluide, homogène et lisse, mais a un arrière goût déplaisant, indésirable après l'avoir réchauffée.

Exemple 10 : Applications aux gâteaux.

Une formulation de gâteau est rapportée dans le tableau 12 ci-dessous.

Tableau 12

|  | Témoin | Gâteau de l'invention |
|---|---|---|
| Farine de blé normale | 175 g | De 155 à 174 g |
| Farine BFW-HT | - | Complément pour 175 g de farine au total, soit 20 à 1 g |
| Sucre | 120 g | 120 g |
| Oeufs | 80 g | 80 g |
| Lait | 60 g | 60 g |
| Beurre | 100 g | 100 g |

Le beurre et le sucre sont passés au mixeur afin d'obtenir une crème à laquelle on rajoute les oeufs. Le mélange est battu avant d'y rajouter la farine et le lait. On verse 400 g de la pâte obtenue dans un moule à gâteau de 20cm de diamètre, enfournée à 180°C pendant 25 minutes.

L'utilisation de farine BFW-HT permet de gagner 1 à 3 points d'hydration.

Après cuisson, et en refroidissant, le gâteau garde sa forme, ne retombe pas et présente un moelleux plus important qui se conserve dans le temps.

A titre comparatif, une pâte préparée et cuite dans les mêmes conditions avec de la farine de blé traditionnelle donne un gâteau qui s'affaisse après la cuisson et qui ne conserve pas sa forme, devient sec et perd son moelleux avec le temps.

**Revendications**

1. Procédé de préparation d'une farine de blé fonctionnelle comprenant la préparation d'une farine de départ de granulométrie définie et la soumission de ladite farine à un traitement hydrothermique, **caractérisé en ce que** l'on utilise une farine de grains de blé full waxy et **en ce que** ledit traitement hydrothermique consiste en l'apport d'eau ou de vapeur et d'énergie thermique pour obtenir un degré de gélatinisation de l'amidon compris entre 15 et 99% en un temps très court de 5 minutes.

2. Procédé de préparation d'une farine de blé fonctionnelle selon la revendication 1, **caractérisé en ce que** ledit degré de gélatinisation est compris entre 20 et 80%.

3. Farine de blé full waxy obtenue par un procédé selon l'une quelconque des revendications 1 ou 2.

4. Procédé de préparation d'amidon de blé amélioré comprenant la soumission dudit amidon à un traitement hydrothermique, **caractérisé en ce que** ledit amidon est extrait de blé full waxy et **en ce que** ledit traitement hydrothermique consiste en l'apport d'eau ou de vapeur et d'énergie thermique pour obtenir un degré de gélatinisation de l'amidon compris entre 15 et 99%.

5. Amidon de blé full waxy obtenu par un procédé selon la revendication 4.

6. Utilisation d'une farine selon la revendication 3 et/ou d'amidon selon la revendication 5 pour la fabrication de produits alimentaires ou non alimentaires.

7. Utilisation d'une farine selon la revendication 3 et/ou d'amidon selon la revendication 5 pour la fabrication de snacks et autres produits extrudés, de produits alimentaires de biscuiterie, de panification et de viennoiserie, de charcuterie, d'aliments pour animaux, de sauces et plats cuisinés, de produits laitiers, de batters.

8. Produits alimentaires choisis parmi les snacks et autres produits extrudés, les produits alimentaires de biscuiterie, de panification et de viennoiserie, de charcuterie, d'aliments pour animaux, de sauces et plats cuisinés, de produits laitiers, de batters, à base de farine selon la revendication 3 et/ou d'amidon selon la revendication 5.

## Claims

1. Method to prepare a functional wheat flour comprising the preparation of an initial flour of defined grain size and the subjection of said flour to a hydrothermal treatment, **characterised in that** a full waxy wheat grain flour is used and **in that** said hydrothermal treatment consists in adding water or steam and thermal energy to obtain a degree of gelatinisation of the starch between 15 and 99% in a very short 5-minute period.

2. Method to prepare a functional wheat flour according to claim 1, **characterised in that** said degree of gelatinisation is between 20 and 80%.

3. Full waxy wheat flour obtained using a method according to any of claims 1 or 2.

4. Improved wheat flour starch preparation method comprising the subjection of said starch to a hydrothermal treatment, **characterised in that** said starch is extracted from full waxy wheat and **in that** said hydrothermal treatment consists in adding water or steam and thermal energy to obtain a degree of gelatinisation of the starch between 15 and 99%.

5. Full waxy wheat starch obtained using a method according to claim 4.

6. Use of a flour according to claim 3 and/or of a starch according to claim 5 for the production of food or non-food products.

7. Use of a flour according to claim 3 and/or of a starch according to claim 5 for the production of snacks and other extruded products, biscuit, bread and Viennese bread, delicatessen products, animal feeds, sauces and ready-cooked dishes, dairy products, batters.

8. Food products selected from snacks and other extruded products, biscuit, bread, Viennese bread, delicatessen products, animal feeds, sauces and ready-cooked dishes, dairy products, batters, based on flour according to claim 3 and/or starch according to claim 5.

## Patentansprüche

1. Herstellungsprozess eines zweckmäßigen Weizenmehles bestehend aus der Herstellung eines Ausgangsmehles mit definierter Kornklassierung und der Unterwerfung besagten Mehles einer hydrothermischen Bearbeitung, **dadurch gekennzeichnet, dass** man ein Mehl eines full waxy Weizenkornes verwendet und die besagte hydrothermische Bearbeitung in einer Wasser- oder Dampfzufuhr und einer Wärmeenergiezufuhr besteht, um einen Gelatinisierungsgrad der Stärke zwischen 15 und 99% in einer sehr kurzen Zeit von 5 Minuten zu erreichen.

2. Herstellungsprozess eines zweckmäßigen Weizenmehles nach Anspruch 1, **dadurch gekennzeichnet, dass** besagter Gelatinisierungsgrad zwischen 20 und 80% liegt.

3. Full waxy Weizenmehl erhalten durch einen Prozess nach einem der Ansprüche 1 oder 2.

**4.** Herstellungsprozess für verbesserte Weizenstärke bestehend aus der Unterwerfung besagter Stärke einer hydrothermischen Bearbeitung, **dadurch gekennzeichnet, dass** besagte Stärke aus full waxy Weizen extrahiert wird und die besagte hydrothermische Bearbeitung in einer Wasser- oder Dampfzufuhr und einer Wärmeenergiezufuhr besteht, um einen Gelatinisierungsgrad der Stärke zwischen 15 und 99% zu erreichen.

**5.** Full waxy Weizenstärke erhalten durch einen Prozess nach Anspruch 4.

**6.** Anwendung eines Mehles nach Anspruch 3 und/oder von Stärke nach Anspruch 5 für die Herstellung von Nahrungsmitteln oder unverzehrbaren Produkten.

**7.** Anwendung eines Mehles nach Anspruch 3 und/oder von Stärke nach Anspruch 5 für die Herstellung von Snacks und anderem Spritzgebäck, Nahrungsmitteln der Keksproduktion, Brotprodukten und Hefe- und Blätterteiggebäck, Wurstwaren, Tiernahrung, Soßen und Fertiggerichten, Milchprodukten, Battern.

**8.** Nahrungsmittel ausgewählt unter den Snacks und anderem Spritzgebäck, Nahrungsmitteln der Keksproduktion, Brotprodukten, Hefe- und Blätterteiggebäck, Wurstwaren, Tiernahrung, Soßen und Fertiggerichten, Milchprodukten, Battern, auf Mehlbasis nach Anspruch 3 und/oder Stärke nach Anspruch 5.

Fig.1

Fig.2

Fig.3

Fig.4

Fig.5

## Propriétés d'écoulement
amidon modifié (E1422) & full waxy HT

### Sauces Béchamel congelées
(40°C)

Fig.6

## Propriétés d'écoulement
amidon modifié (E1422) & full waxy HT

### Sauces Tomates pasteurisées
(40°C)

Amidon modifié (E1422)

Farine BFW-HT

gradient (1/s)

Contrainte (Pa)